# EUROPEAN PATENT SPECIFICATION

(11) **EP 0 559 252 B1**
(45) Date of publication and mention of the grant of the patent: **07.05.1997**
(21) Application number: 93200306.4
(22) Date of filing: 05.02.1993
(51) Int. Cl.: D01F 1/10, D01F 6/04, C08K 5/09

(54) **Horticultural yarn**
Garn für den Gartenbau
Fil pour l'horticulture

(30) Priority: 07.02.1992 NL 9200233
(43) Date of publication of application: 08.09.1993
(73) Proprietor: Lankhorst Touwfabrieken B.V., NL-8607 AD Sneek (NL)
(72) Inventor: Klobbie, Eduard Johan Gerard, NL-8608 WS Sneek (NL); Kok, Rudolf Hendrik, NL-8633 KV Ysbrechtum (NL)
(74) Representative: Smulders, Theodorus A.H.J., Ir.

(56) References cited:
- DE-A- 2 242 275
- FR-A- 2 154 596
- FR-A- 2 236 896
- FR-A- 2 617 857
- GB-A- 2 220 944
- US-A- 3 981 856
- DATABASE WPIL, AN=85-163771 (27), Derwent Publications Ltd, London, GB
- CHEMICAL ABSTRACTS, vol. 116, no. 4, 1992, page 97, abstract no. 22808k, Columbus, Ohio, US
- Encyclopedia of Polymer Science and Engineering, vol. 4 (1986); John Wiley & Sons, New York (US); p. 653-656, 693, 694
- Encyclopedia of Polymer Science and Engineering, vol. 15 (1989); John Wiley & Sons, New York (US); p. 563-564

## Description

The invention relates to horticultural yarn. Horicultural yarn in the form of thread and rope is used in glasshouse horticulture in the cultivation of crops such as cucumber plants, tomato plants, paprika plants and the like. The horticultural yarn is led upwards from the cultivating surface and attached to a thread, bar, girder or the like, positioned above the cultivating surface. During growth, the plants are guided along the yarn, so that optimum access of light and air is possible.

Originally, horticultural yarns were made from natural fibres. Today, synthetic yarns of polypropylene and poyethylene, for instance, are used on a large scale. An advantage of using synthetic yarns is that such synthetic yarns are stronger than natural yarns. Consequently, the threads and ropes formed therefrom can be thinner than threads and ropes produced from natural yarns. Accordingly, the reels for the threads or ropes hanging in the greenhouse can be smaller and there is less loss of light for the plants growing along threads or ropes. Moreover, unlike the conventional natural yarns, synthetic yarns can be given a bright white colour in a simple manner. The white yarns reflect light, which also causes less loss of light for the plants. Other advantages of synthetic yarns are that they are not very sensitive to moisture and hardly rot, if at all.

Presently, owing to the above-mentioned advantages, synthetic yarns are strongly preferred to natural yarns for use in glasshouse horticulture.

However, a problem that occurs when using synthetic yarns is that they cannot be made to compost. There is a tendency after the harvest to compost the residues, i.e. essentially the plants and the horticultural yarn used, and possibly the cultivation soil. However, this is not possible with the existing horticultural yarns. In principle, it is conceivable that the synthetic threads are removed from the plants, which may or may not have been cut into bits first, before composting the plants. However, in practice this is not possible, on account of the time and manpower required therefor. As an alternative, natural yarns could be used again, but this would again involve the objections described hereinabove.

Accordingly, there is a need for a yarn with strength of synthetic yarns and the compostability of natural yarns. The object of the invention is to meet this need. To this end, according to the invention, a compostable synthetic yarn is provided.

According to the invention a horticulture synthetic yarn for use in glass-house horticultural for guiding and supporting plants, which plants after their cultivation cycle and harvest are composted, said yarn being made from one or more substances belonging to the group of polyolefins can be obtained by adding to the basic material for producing synthetic yarn a photothermally degradable substance in an amount such that the yarn is compostable and by adding an amount of UV-stabilizer adjusted to the duration of the cultivation cycle of the plants for which the yarn is to be used and to the thickness of the yarn. By the term "photothermally decomposable or degradable material", a material is meant which disintegrates under the influence of light and which also disintegrates under the influence of heat. These two properties normally go together in synthetic materials, i.e. the thermal degradability is obtained by the use of substances that also cause the resistance to ultraviolet light to decrease.

It is observed that Chemical Abstracts, Vol. 116, Abstract No. 22808k (1992) does disclose polyethylene monofilaments which are degradable by light and bacteria. The possibility of degradation by bacteria in principle makes the monofilaments compostable. However, the composting process by bacteria does require the presence of specific bacteria and also takes a rather long time, which is often not available.

Further FR-A-2 154 596 discloses polyethylene materials which are degradable by actinic radiation. Such a material however would not be suitable for horticultural yarns which will be deposited on a compost heap, because in the compost heap no actinic radiation will be able to reach the polyethylene materials.

The basic material may consist of polyolefins such as, for instance, polypropylene, polyethylene, or polypropylene mixed with LDPE and/or HDPE. The basic material also includes the conventional additives required to obtain the desired colour and to enable proper processing of the material, for instance extrusion. Further, a UV-stabilizer can be, added, for instance in masterbatch form, serving to prevent the yarn for the normal duration of its use, i.e. the cultivation cycle of the plants for which the yarn will be used, from aging under the influence of ultraviolet light to such an extent, that the threads or ropes break before the end of the cultivation cycle. In this connection, it is observed that the plants have the greatest weight at the end of the cultivation cycle and that at that moment the threads or ropes must still be strong enough to be capable of carrying the weight of the plants, this in spite of the fact that already during the cultivation cycle, the yarn will start degrading under the influence of ultraviolet light in particular.

On account of the loss of light, it is not possible simply to make the yarn so thick that in any case sufficient strenght is obtained at the end of the cultivation cycle. Depending on the use, the yarn number is below 40,000 denier, and preferably between 6,000 and 15,000 denier. Starting from a particular desired yarn number, the effective lifetime can be controlled by adding more or less UV-stabilizer to the basic material.

The amount of photothermally degradable material must be selected such that during its residence in the compost heap, or on maturation fields, where the temperature rises to above 50°C, degradation takes place sufficiently quickly. In practice, it is desirable that the ropes or threads have disintegrated completely after approximately 18 months, which means that the photothermally degradable material must have disintegrated completely after a residence of approximately 18 months at the most. When the photothermally degradable material has disintegrated, the coherence of the yarn material has disappeared as well and hence the yarns and consequently the ropes and threads will also disintegrate.

It is observed that here the degradation of material does not occur through biological activity, such as bacterial and fungal activity. The disintegration of the yarns according to the invention takes place exclusively by, successively, light (during cultivation) and then in the compost heap by heat. The light initiates the degrading process to be completed in the compost heap by heat.

Suitable photothermally degradable materials are commercially available. These materials may for instance contain stearates. A suitable material is marketed under the name of P DEG 89 by A. Schulman Plastics N.V. of Bornem (Belgium).

The photothermal material is preferably added to the basic material in amounts of 0.025 - 0.6% by weight. In masterbatch form with 10% by weight of active substance, this means a content of 0.25 - 6% by weight.

It is observed that in the manufacture of foil-shaped material for the production of rubbish bags, for instance, it is known to use starchy additives for rendering the foil material degradable. However, such additives cannot be used for yarns, because during the production process of the yarns, the semi-finished product, consisting of narrow strips of material, cut from extruded foil in one or more steps, is stretched in one of more steps with a stretching ratio of from 1:4 to 1:15, for instance. Such a pocessing operation is not possible with materials comprising starchy additives.

According to the invention, a production process fpr making horticultural yarns for use in glass-house horticulture for guiding and supporting plants, which plants after their cultivation cycle and harvest are composted, said yarn being from one or more substances belonging to the group of polyolefins is characterized in that a basic material is prepared that contains, in addition to one or more polyolefins, conventional additives for obtaining the desired colour and suitable properties for the subsequent processing of the basic material, that an amount of photothermally degradable material is added to the basic material, and that the basic material is extruded by means of a suitable extruder. Further, a UV-stabilizer can be added to the basic material so as to adapt the lifetime of the yarn to the length of the cultivation cycle. By adding UV-stabilizer, the lifetime of the yarn can be controlled under otherwise constant conditions. Exact amounts can be determined by experiment.

It is observed that, after the foregoing, various modifications will readily occur to a person of ordinary skill in the art. For instance, the yarn can be made in any manner known for producing yarn from polyolefins. According to a first method, monofilaments are extruded. According to another method, multifilaments are formed by means of an extrusion head with a number of openings. Also, narrow strips can be extruded or a foil, from which narrow strips are cut later in one or more steps. Normally, the narrow strips are subjected to one or more stretching operations to obtain a yarn of the desired thickness. The yarn obtained can be twined and worked up into threads or ropes of the desired thickness. Further, the yarn should of course meet a number of common requirements which apply to any horticultural yarn, i.e., the yarns must be resistant to the action of water and crop protection substances, must absorb little or no moisture, must not have any detrimental effect on the plants, and must be supple.

## Claims

1. Horticultural yarn for use in glass-house horticulture for guiding and supporting plants, which plants after their cultivation cycle and harvest are composted, said yarn being made from one or more substances belonging to the group of polyolefins, **characterized** in that the yarn material contains a photothermally degradable substance, known per se, in an amount such that the yarn is compostable, and in that the horticultural yarn contains an amount of UV-stabilizer adjusted to the duration of the cultivation cycle of the plants for which the yarn is to be used and to the thickness of the yarn.

2. Horticultural yarn according to claim 1, **characterized** in that the photothermally degradable substance is present in the yarn material in a content of 0.025 - 0.6% by weight.

3. Horticultural yarn according to any one of the preceding claims, **characterized** in that the yarn has a yarn number of below 40,000 denier.

4. Horticultural yarn according to any one of the preceding claims, **characterized** in that the yarn number is between 6,000 and 15,000 denier.

5. Horticultural yarn according to any one of the preceding claims, **characterized** in that the photothermally degradable substance contains stearates.

6. A method for making horticultural yarn for use in glass-house horticulture for guiding and supporting plants, which plants after their cultivation cycle and harvest are composted, said yarn being from one or more substances belonging to the group of polyolefins, wherein a basic material is prepared, containing, in addition to one or more polyolefins, conventional additives to obtain the desired colour and suitable properties for the subsequent processing of the basic material, and that the basic material is extruded by means of a suitable extruder, **characterized** in that an amount of photothermally degradable material such that the yarn is compostable, as well as UV-stabilizer in an amount depending upon the desired lifetime of the yarn is added to the basic material.

7. A method according to claim 6, **characterized** in that by means of the extruder, a monofilament is extruded for making a yarn of the desired thickness.

8. A method according to claim 6, **characterized** in that by means of the extruder, multifilaments are extruded for making a yarn of the desired thickness.

9. A method according to claim 6, **characterized** in that by means of the extruder, a plurality of narrow strips are extruded, which are subjected to a stretching operation at least once so as to obtain a yarn of the desired thickness.

10. A method according to claim 6, **characterized** in that by means of the extruder, a foil is extruded; that the extruded foil is cut into narrow strips in one or more steps and that the narrow strips are subjected to a stretching operation at least once so as to obtain a yarn of the desired thickness.

11. A method according to any one of claims 6-10, **characterized** in that the photothermally degradable material is added to the basic material in a content of 0.025-0.6% by weight.

12. A method according to any one of claims 6-11, **characterized** in that the photothermally degradable material is added to the basic material in masterbatch form having an active substance content of 10% by weight.

13. A method according to any one of claims 7-12, **characterized** in that a yarn is made having a yarn number of below 40,000 denier.

14. A method according to claim 13, **characterized** in that a yarn is made having a yarn number of between 6,000 and 15,000 denier.

15. A method according to any one of claims 7-14, **characterized** in that the yarn obtained is twined.

## Patentansprüche

1. Gartenbau-Garn für den Gartenbau in Gewächshäusern, zum Führen und Halten von Pflanzen, die nach ihrem Anbauzyklus und ihrer Beerntung kompostiert werden, wobei das Garn aus einer oder mehreren Substanzen aus der Gruppe der Polyolefine hergestellt ist,
dadurch gekennzeichnet, daß das Garnmaterial eine an sich bekannte photothermisch abbaubare Substanz in einer derartigen Menge enthält, daß das Garn kompostierbar ist, und daß das Gartenbau-Garn eine Menge an UV-Stabilisierern enthält, die entsprechend der Dauer des Anbauzyklus der Pflanzen, für die das Garn verwendet werden soll, und der Dicke des Garns eingestellt ist.

2. Gartenbau-Garn nach Anspruch 1, dadurch gekennzeichnet, daß die photothermisch abbaubare Substanz in dem Garnmaterial in einem Anteil von 0,025 - 0,6 Gewichtsprozent vorhanden ist.

3. Gartenbau-Garn nach einem der vorhergehenden Ansprüche, dadurch gekennzeichnet, daß das Garn eine Garn-Zahl von weniger als 40.000 Denier aufweist.

4. Gartenbau-Garn nach einem der vorhergehenden Ansprüche, dadurch gekennzeichnet, daß die Garn-Zahl zwischen 6.000 und 15.000 Denier beträgt.

5. Gartenbau-Garn nach einem der vorhergehenden Ansprüche, dadurch gekennzeichnet, daß die photothermisch abbaubare Substanz Stearate enthält.

6. Verfahren zum Herstellen von für den Gartenbau in Gewächshäusern vorgesehenem Gartenbau-Garn, das zum Führen und Halten von Pflanzen vorgesehen ist, die nach ihrem Anbauzyklus und ihrer Beerntung kompostiert werden, und das aus einer oder mehreren Substanzen aus der Gruppe der Polyolefine besteht, bei dem ein Basismaterial zubereitet wird, das zusätzlich zu einem oder mehreren Polyolefinen herkömmliche Zusätze enthält, um die gewünschte Farbe und gewünschte Eigenschaften für die nachfolgende Verarbeitung des Basismaterials zu erzielen, und das Basismaterial mit einem geeigneten Extruder extrudiert wird, dadurch gekennzeichnet, daß dem Basismaterial eine das Garn kompostierbar machende Menge eines photothermisch abbaubaren Materials und UV-Stabilisierer in einer von der gewünschten Lebensdauer des Garns abhängigen Menge hinzugefügt werden.

7. Verfahren nach Anspruch 6, dadurch gekennzeichnet, daß zur Herstellung eines die gewünschte Dicke aufweisenden Garns ein Monofilament mittels eines Extruders extrudiert wird.

8. Verfahren nach Anspruch 6, dadurch gekennzeichnet, daß zur Herstellung eines die gewünschte Dicke aufweisenden Garns Multifilamente mittels eines Extruders extrudiert werden.

9. Verfahren nach Anspruch 6, dadurch gekennzeichnet, daß zur Herstellung eines die gewünschte Dicke aufweisenden Garns mittels eines Extruders mehrere schmale Streifen extrudiert werden, die mindestens einmal einer Streckoperation unterzogen werden.

10. Verfahren nach Anspruch 6, dadurch gekennzeichnet, daß zur Herstellung eines die gewünschte Dicke aufweisenden Garns mittels eines Extruders eine Folie extrudiert wird; die extrudierte Folie in einem oder mehreren Schritten in schmale Streifen geschnitten wird und die schmalen Streifen mindestens einmal einer Streckoperation unterzogen werden.

11. Verfahren nach einem der Ansprüche 6-10, dadurch gekennzeichnet, daß das photothermisch abbaubare Material dem Basismaterial in einem Anteil von 0,025 - 0,6 Gewichtsprozent hinzugefügt wird.

12. Verfahren nach einem der Ansprüche 6-11, dadurch gekennzeichnet, daß das photothermisch abbaubare Material dem Basismaterial in Masterbatch-Form mit einem Aktivsubstanz-Anteil von 10 Gewichtsprozent hinzugefügt wird.

13. Verfahren nach einem der Ansprüche 7-12, dadurch gekennzeichnet, daß ein Garn mit einer Garn-Zahl von weniger als 40.000 Denier hergestellt wird.

14. Verfahren nach Anspruch 13, dadurch gekennzeichnet, daß ein Garn mit einer Garn-Zahl zwischen 6.000 und 15.000 Denier hergestellt wird.

15. Verfahren nach einem der Ansprüche 7-14, dadurch gekennzeichnet, daß das hergestellte Garn gezwirnt wird.

## Revendications

1. Fil horticole destiné à être utilisé pour l'horticulture en serre, pour le guidage et le support de plantes destinées à former un compost après leur cycle de culture et de cueillette, le fil étant formé d'une ou plusieurs substances appartenant au groupe des polyoléfines, caractérisé en ce que le matériau du fil contient une substance photothermiquement dégradable, de type connu, en quantité telle que le fil peut former un compost, et en ce que le fil horticole contient une quantité d'un agent stabilisant vis-à-vis des ultraviolets ajustée en fonction de la durée du cycle de culture des plantes avec lesquelles le fil est destiné à être utilisé et en fonction de l'épaisseur du fil.

2. Fil horticole selon la revendication 1, caractérisé en ce que la substance photothermiquement dégradable est présente dans le matériau du fil en quantité comprise entre 0,025 et 0,6 % en poids.

3. Fil horticole selon l'une quelconque des revendications précédentes, caractérisé en ce que le fil a un titre inférieur à 40 000 deniers.

4. Fil horticole selon l'une quelconque des revendications précédentes, caractérisé en ce que son titre est compris entre 6 000 et 15 000 deniers.

5. Fil horticole selon l'une quelconque des revendications précédentes, caractérisé en ce que la substance photothermiquement dégradable contient des stéarates.

6. Procédé de fabrication d'un fil horticole destiné à être utilisé dans l'horticulture en serre pour le guidage et le support de plantes, ces plantes étant destinées à former un compost après leur cycle de culture et leur cueillette, le fil étant choisi parmi une ou plusieurs substances appartenant au groupe des polyoléfines, dans lequel un matériau de base est préparé, ce matériau contenant, en plus d'une ou plusieurs polyoléfines, des adjuvants classiques destinés à donner la couleur voulue et les propriétés convenant au traitement ultérieur du matériau de base, et le matériau de base est extrudé par une extrudeuse, caractérisé en ce qu'une quantité d'un matériau photothermiquement dégradable tel que le fil peut former un compost ainsi qu'un agent stabilisant aux ultraviolets en quantité qui dépend de la durée de vie voulue du fil sont ajoutés au matériau de base.

7. Procédé selon la revendication 6, caractérisé en ce qu'un monofilament est extrudé pour la fabrication d'un fil d'épaisseur voulue à l'aide de l'extrudeuse.

8. Procédé selon la revendication 6, caractérisé en ce que des multifilaments sont extrudés pour la fabrication d'un fil d'épaisseur voulue à l'aide de l'extrudeuse.

9. Procédé selon la revendication 6, caractérisé en ce que plusieurs bandes étroites sont extrudées à l'aide de l'extrudeuse et sont soumises à une opération d'étirage au moins une fois afin qu'un fil d'épaisseur voulue soit obtenu.

10. Procédé selon la revendication 6, caractérisé en ce qu'une feuille est extrudée avec l'extrudeuse, et la feuille extrudée est coupée en bandes étroites en une ou plusieurs étapes, et les bandes étroites sont soumises à une opération d'étirage au moins une fois pour l'obtention d'un fil d'épaisseur voulue.

11. Procédé selon l'une quelconque des revendications 6 à 10, caractérisé en ce que le matériau photothermiquement dégradable est ajouté au matériau de base en quantité comprise entre 0,025 et 0,6 % en poids.

12. Procédé selon l'une quelconque des revendications 6 à 11, caractérisé en ce que le matériau photothermiquement dégradable est ajouté au matériau de base sous forme d'une composition ayant une teneur en substance active égale à 10 % en poids.

13. Procédé selon l'une quelconque des revendications 7 à 12, caractérisé en ce qu'un fil est formé avec un titre inférieur à 40 000 deniers.

14. Procédé selon la revendication 13, caractérisé en ce que le fil est formé avec un titre compris entre 6 000 et 15 000 deniers.

15. Procédé selon l'une quelconque des revendications 7 à 14, caractérisé en ce que le fil obtenu est entrelacé.
